# EUROPÄISCHE PATENTANMELDUNG

(11) **EP 1 239 558 A2**
(43) Veröffentlichungstag der Anmeldung: **11.09.2002**
(21) Anmeldenummer: 02100147.4
(22) Anmeldetag: 19.02.2002
(51) Int. Cl.: H01S 3/30, H01S 3/094

(54) **Pumpquelle mit jeweils mehreren Pumplasern zur Raman-Verstärkung eines WDM-Signals mit minimierter Vierwellenmischung**

(30) Priorität: 09.03.2001 DE 10111491
(71) Anmelder: SIEMENS AKTIENGESELLSCHAFT, 80333 München (DE)
(72) Erfinder: Bock, Harald, 86150, Augsburg (DE); Neuhauser, Richard, Dr., 85375, Neufahrn (DE)

(57) **Zusammenfassung**

Eine Pumpquelle zur Raman-Verstärkung eines optisches Wellenlängen-Multiplex-(WDM)-Signals (S) weist mehrere Pumplaser (PL₁,...,PLₘ) mit jeweils unterschiedlichen Pumpwellenlängen (?₁, ..., ?ₘ) auf. Die Pumpwellenlängen (?₁,..., ?ₘ) sind derart gewählt, daß Mischprodukte aus einer Vierwellenmischung FWM im Signalsspektrum von (S) minimiert oder entfernt werden. Im Signalsspektrum können auch Übertragungsbänder für die Kanäle des WDM-Signals (S) so definiert werden, daß die Mischprodukte zwischen den Übertragungsbändern liegen. Unterschiede der Signal-Rauschabstände (OSNR)zwischen den Kanälen des WDM-Signals (S) aufgrund von Vierwellenmischung FWM werden also im Signalsspektrum effizient minimiert.

## Beschreibung

Die Erfindung betrifft eine Pumpquelle nach dem Oberbegriff des Patentanspruchs 1.

Die Verwendung steigender Kanalzahlen bei der Übertragung eines optischen Wellenlängen-Multiplex-(WDM-)Signals entlang langer Faserstrecken führt bei gleicher Summenausgangsleistung der optischen Verstärker zu einer Verringerung der Ausgangsleistung in der Faser pro Übertragungskanal und damit zu einer Verschlechterung der für die erreichbare Bitfehlerrate BER entscheidenden optischen Signal-Rauschabstände OSNR am Empfänger. Ein ähnliches Problem ergibt sich bei Erhöhung der Datenrate. Um nach Erhöhung der Datenrate eine identische Systemperformance zu erreichen, muß ein höheres OSNR am Empfänger realisiert werden als bei einer niedrigeren Datenrate. Das Erreichen eines ausreichenden OSNR am Empfänger ist daher ein kritischer Punkt bei der Auslegung künftiger Systemgenerationen.

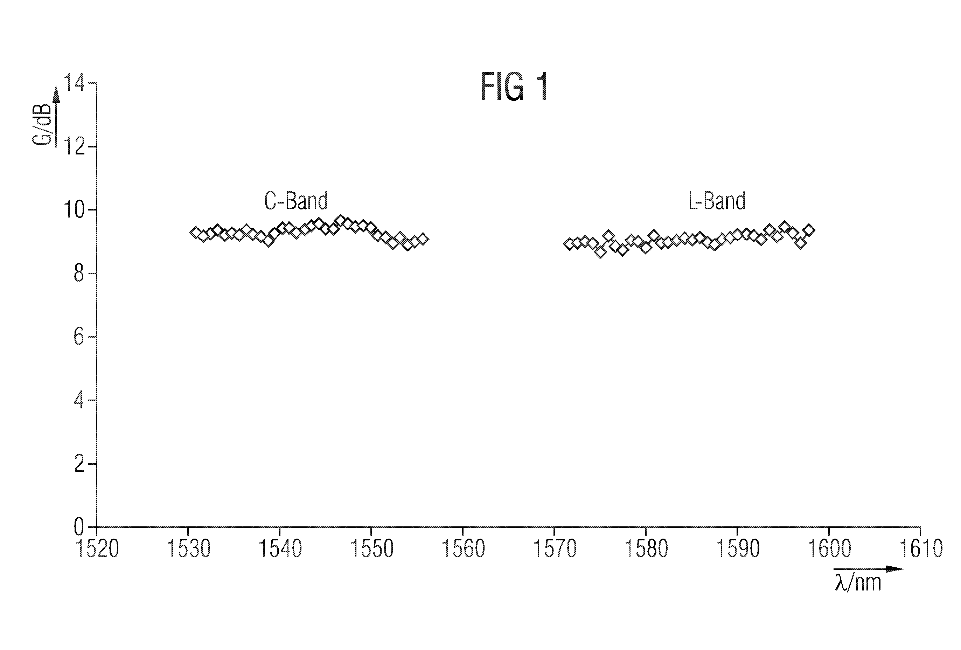

Für die Übertragung eines optischen WDM-Signals entlang langer Faserstrecken sind optische Verstärkermodule nach jeweiligen Übertragungsabschnitten erforderlich. Eine wirkungsvolle Methode zur zusätzlichen Verstärkung eines Signals beruht auf stimulierter Raman-Streuung, bei der ein Pumpsignal in die Übertragungsfaser eingespeist wird. Das Pumpsignal kann dabei mittels mehrerer Pumpquellen, meistens Laserdioden, erzeugt werden.
Der in diesem Zusammenhang bekannte Stand der Technik wird im folgenden anhand der Figuren 1 bis 3 näher erläutert. Dabei zeigen:
- Figur 1:: den Raman-Gewinn im C- und L-Band,
- Figur 2:: die Mischprodukte durch Vierwellenmischung FWM im Wellenlängenbereich der Pumpquelle und des WDM-Signals,
- Figur 3:: den jeweiligen Pegel der Kanäle des WDM-Signals bei Vierwellenmischung FWM,
Wie die Figur 1 zeigt, führt die Verwendung mehrerer Pumpwellenlängen zu einem breiten flachen Gewinnspektrum im C- und L-Band.

Der Wellenlängensatz der Pumpquellen wird so gewählt, daß alle Kanäle des WDM-Signals unter Betrachtung des Raman-Gewinn-Spektrums (s. "Fiber Optic Communication Systems", G.P. Agrawal, 2. edition, p.381, fig.8.11) möglichst gleich verstärkt werden. Ein Kanal mit einer Frequenzverschiebung von 13,2 THz zu einer Pumpfrequenz wird maximal verstärkt. Liegt eine kleinere oder größere Frequenzdifferenz zwischen einem Kanal und einem Pumpsignal vor, so wird der Kanal weniger verstärkt. Durch Verwendung einer größeren Anzahl von unterschiedlichen Pumpwellenlängen werden alle Kanäle des WDM-Übertragungssignalen homogener verstärkt.
Ein solcher Raman-Verstärker ist beispielweise in der älteren Patenanmeldung mit dem Aktenzeichen P 10048460.3 beschrieben.

Zum Multiplexen der unterschiedlichen Pumpwellenlängen werden oft Mach-Zender-Interferometer verwendet, die einen Betrieb für eingekoppelte Leistungen bis z. B. 2 W erlauben. Dies erfordert ein Pumpwellenlängenraster mit zueinander äquidistanten Pumpwellenlängen. Eine ausführlichere Beschreibung steht in der Veröffentlichung "Namiki et al., Proc. OAA 2000, Quebec, OMB 2, 7-9". Beim Multiplexen von wenigen Pumpwellenlängen können auch Interferenzfilter verwendet werden. Hierbei können auch nicht-äquidistante Abstände der Pumpwellenlängen realisiert werden. Die in derartige Multiplexer eingekoppelte Leistung ist aber kleiner als bei Mach-Zender-Interferometern. In der Veröffentlichung "Kidorf et al., IEEE Phot. Technol. Lett., 11 (1999), 530-532" wird eine nicht-äquidistante Verteilung der Pumpwellenlängen beschrieben, bei der eine größere Konzentration der kleineren Pumpwellenlängen im Vergleich zu größeren Pumpwellenlängen vorgesehen ist. Dadurch wird ein entsprechender Leistungstransfer von kleinen zu größeren Pumpwellenlängen durch Raman Wechselwirkung entlang der Faser ausgeglichen.

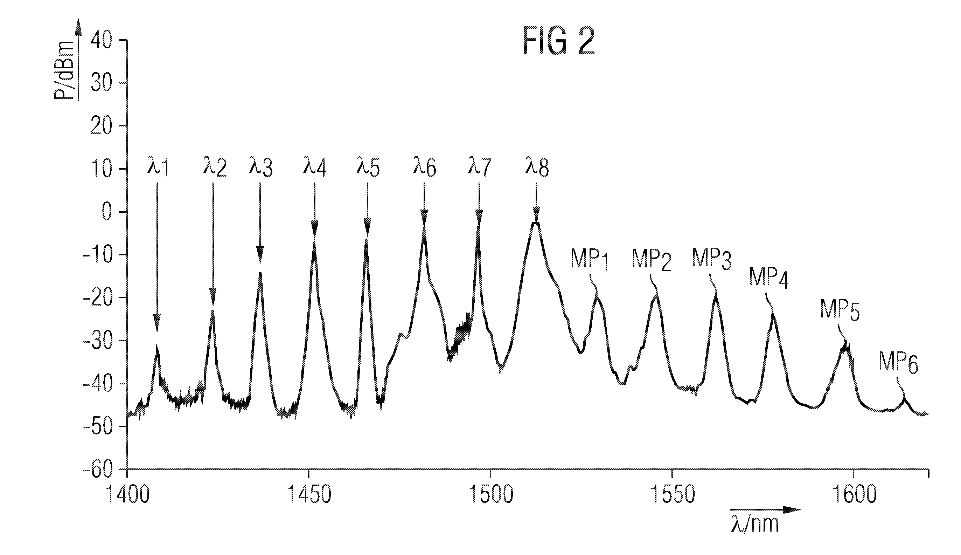

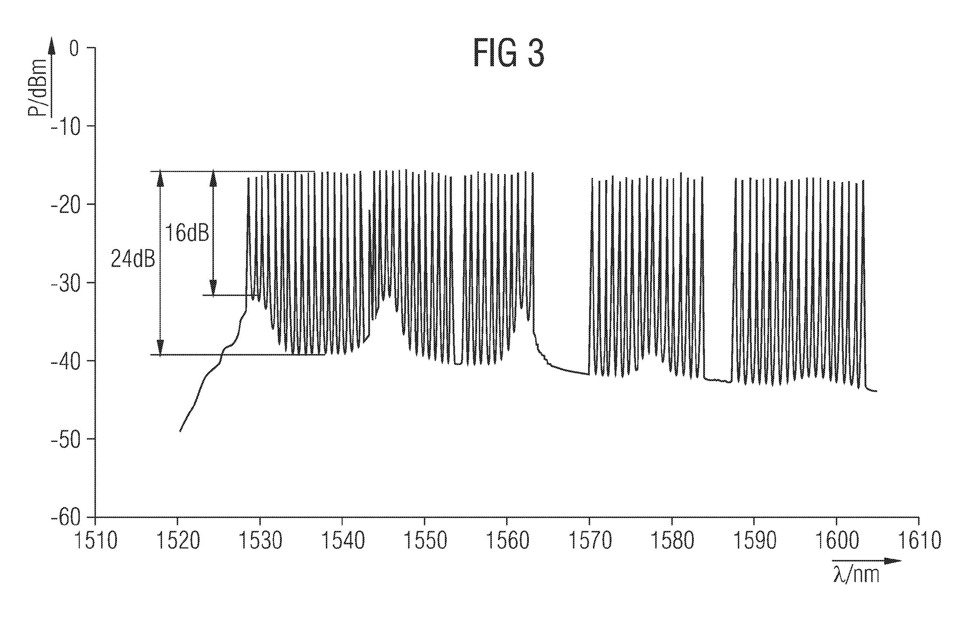

Bei Verwendung von äquidistanten Pumpwellenlängen, z. B. (λ₁, ..., λ₈) in Figur 2, für Signalübertragung im C-und L- Band (d.h. Pumpwellenlängen zwischen etwa 1420 nm und 1510 nm, Signalwellenlängen zwischen ca. 1525 nm und 1610 nm) tritt zwischen den Pumpwellenlängen Vierwellenmischung oder Four Wave Mixing FWM in bestimmten Fasertypen vor allem bei niedriger Dispersion im Bereich der Pumpwellenlängen auf. Dadurch werden neue Frequenzkomponenten oder sogenannte Mischprodukte MPᵢ (i>0) bei Summen oder Differenzen von Pumpfrequenzen erzeugt, die sich in oder außerhalb des Spektrums der Pumpquelle überlagern (siehe Figur 2). Damit können sich die Mischprodukte direkt dem WDM-Signalsspektrum überlagern, falls die höheren Pumpwellenlängen nahe an den kleineren Signalwellenlängen sind. Die Signalqualität, z. B. die Signal-Rauschabstände OSNR bestimmter Kanäle des WDM-Signals, wird dadurch verschlechtert. In Figur 3 werden die Pegel des WDM-Signals im Wellenlängenbereich dargestellt. Durch Vierwellenmischung treten, wie in der Figur 3 dargestellt, durch die Überlagerung von Mischprodukten im Signalspektrum Signal-Rauschabstände-OSNR Unterschiede von 8 dB auf. Der beschriebene Effekt tritt besonders stark bei einer breitbandigen Raman-Verstärkung im C- und L-Band auf, da für eine Verstärkung im L-Band die Pumpwellenlängen nahe an das C-Band heranreichen müssen. Somit liegen die stärksten Mischprodukte im C-Band und überlagern sich dem Signalspektrum.

Eine ausführliche Beschreibung der Vierwellenmischung ist in "Agrawal, Nonlinear Fiber Optics, 1995, p. 404 gegeben. In diesem Zusammenhang werden hier die Unterschiede zwischen einer degenerierten und einer nicht-degenerierten Vierwellenmischung FWM beschrieben. Die nicht-degenerierte Vierwellenmischung basiert auf der Wechselwirkung von Photonen dreier verschiedener Wellenlängen, die ein Photon bei einer vierten Wellenlänge erzeugen, während bei der degenerierten Vierwellenmischung eine Wellenlänge quasi doppelt in den Mischprozess eingeht. Die nicht-degenerierte Vierwellenmischung benötigt daher drei verschiedene Wellenlängen, während die degenerierte Vierwellenmischung bereits bei zwei Wellenlängen erfolgen kann. Das stärkste Mischprodukt durch Vierwellenmischung bei einer breitbandigen Pumpquelle mit mehreren Pumpwellenlängen (λ₁, ..., λₘ) befindet sich somit in einem Abstand von λₘ-λₘ₋₁ nach der höchsten Pumpwellenlänge λₘ bei degenerierter Vierwellenmischung.

Die Aufgabe der Erfindung besteht also darin, den Einfluss der in einer breitbandigen Pumpquelle aufgrund von Vierwellenmischung FWM erzeugten Mischprodukte in dem Signalspektrum zu eliminieren oder mindestens stark zu minimieren.

Erfindungsgemäß wird diese Aufgabe durch eine Pumpquelle gemäß den Merkmalen des Anspruchs 1 gelöst.

Zweckmäßige Weiterbildungen der Erfindung werden in den abhängigen Ansprüchen beschrieben.

Bei der erfindungsgemäßen Pumpquelle werden die Pumplaser Pumpwellenlängen aufweisen, deren Mischprodukte aufgrund von Vierwellenmischung FWM teilweise außerhalb und/oder in Lücken innerhalb des Spektrums des WDM-Signals liegen. Dadurch werden die OSNR-Unterschiede der Kanäle des WDM-Signals stark reduziert.

Wenn das Signalsspektrum in verschiedene Übertragungsbänder aufgeteilt wird, werden die Pumpwellenlängen der Pumplaser derart gewählt, daß ein oder mehrere Mischprodukte zwischen den Übertragungsbändern des Spektrums des WDM-Signals liegen. Vorteilhafterweise werden keine Kanäle des WDM-Signals im Bereich der Mischprodukte übertragen.

Durch eine geeignete Wahl des Abstands zwischen den größten Pumpwellenlängen der Pumplaser und den vordefinierten kleinsten Signalwellenlängen wird das erste und stärkste Mischprodukt aus degenerierter Vierwellenmischung FWM über dem Pumpwellenlängenbereich nicht innerhalb aber außerhalb des Signalsspektrums fallen. Die weiteren Mischprodukte werden sich einerseits dem Signalspektrum überlagern oder außerhalb des Signalsspektrums fallen.

Zur Verkleinerung der Breite der Mischprodukte aus der Vierwellenmischung FMW werden die Pumpwellenlängen auch schmal und die Pumpwellenlängenabständen möglichst gleich gewählt.

Ein Ausführungsbeispiel der Erfindung wird anhand weiterer Figuren näher beschrieben. Dabei zeigen:

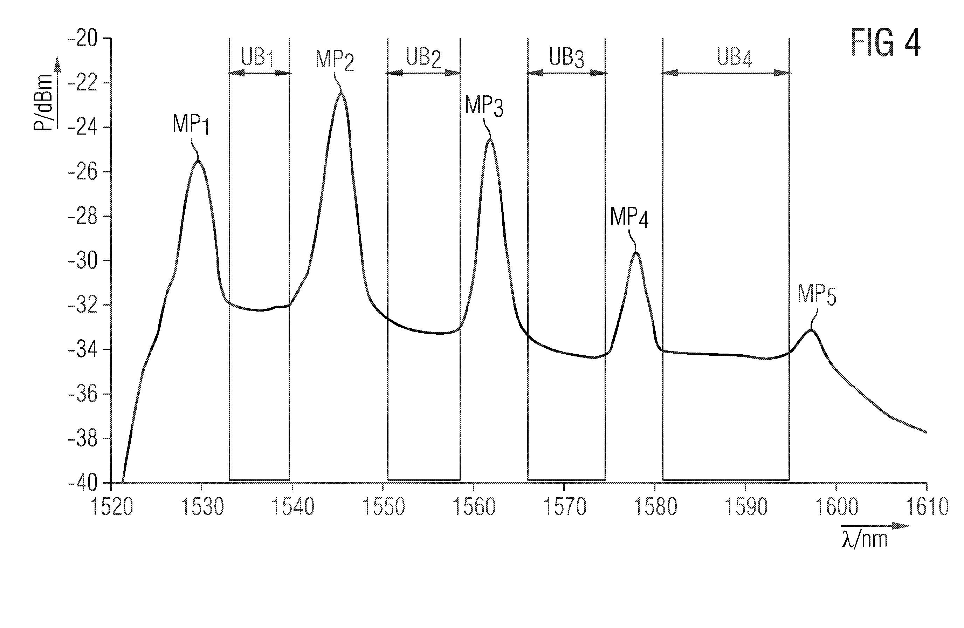

- Figur 4:: die Übertragungsbänder des WDM-Signals außerhalb der Mischprodukte bei Vierwellenmischung FMW,

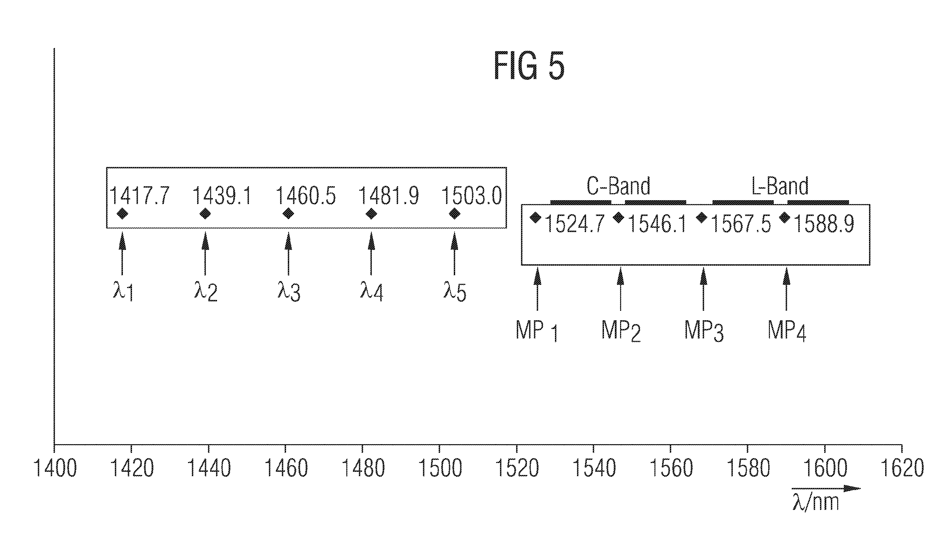

- Figur 5:: ein Beispiel für ein erfindungsgemäßes Pumpwellenlängenraster bei einer Übertragung im C- und L-Band.

In Figur 4 werden die Pumplaser PL₁, ..., PLₘ ohne Übertragung des WDM-Signals angeschaltet. Am Ende des Pumpwellenlängen-Multiplexer werden bei dieser Anordnung fünf Mischprodukte oder FMW-Peaks MP1, ..., MP5 im Wellenlängenbereich 1520 nm < λ < 1610 nm des Signalspektrums als Pegel P in dBm gemessen. Zwischen den fünf Mischprodukten können vier Übertragungsbänder UB1, ..., UB4 abgegrenzt werden, in denen die Kanäle des WDM-Signals ohne Störung durch Vierwellenmischung FWM übertragen werden können. Das erste Mischprodukt MP1 bei 1528 nm fällt vor das erste Übertragungsband UB1.

In Figur 5 ist ein Pumpwellenlängenraster λ₁, ..., λ₅ mit fünf Pumplasern PL₁, ..., PL₆ dargestellt. Vier Mischprodukte MP₁, ..., MP₄ treten teils vor dem Signalsspektrum und teils innerhalb des Signalsspektrums im C- und L-Band auf. Zwei Übetragungsbänder UB1, UB2 im C-Band und zwei weitere UB3, UB4 ermöglichen eine Übertragung des WDM-Signals ohne Störung durch die Vierwellenmischung FWM.

Ein weiteres Ausführungsbeispiel wäre die Verwendung von acht nicht-äquidistanten Pumpwellenlängen, die durch Interferenzfilter zusammen gemultiplext werden. Für die Übertragung im C- und L-Band (zw. ca 1525 nm bis 1610 nm) können die acht Pumpwellenlängen im Bereich von 1420 nm bis 1510 nm gewählt werden. Um einen Leistungstransfer durch Raman Wechselwirkungen auszugleichen, werden entweder die Pumpwellenlängenabstände klein für die kleinen Wellenlängen und größer für die großen Wellenlängen gehalten oder die Ausgangsleistung der kleinen Wellenlängen größer als diejenige der großen Wellenlängen gewählt (z.B. durch die Verwendung von zwei statt einem Pumplaser bei einer kleinen Pumpwellenlänge). Die unterschiedlichen Abstände der Pumpwellenlängen werden auch derart optimiert, daß einerseits möglichst kleine Mischprodukte im Signalspektrum auftreten, anderseits die Überlagerung der einzelnen Gewinnspektren ein ausreichend flaches Gewinnspektrum ergibt.

## Patentansprüche

1. Pumpquelle mit mehreren Pumplasern (PL₁, ..., PLₘ) zur Raman-Verstärkung eines Wellenlängen-Multiplex-(WDM-)Signals (S) ,
**dadurch gekennzeichnet,**
**daß** die Pumplaser (PL₁, ..., PLₘ) Pumpwellenlängen (λ₁, ..., λₘ) aufweisen, deren Mischprodukte (MP₁, ..., MPₙ) teilweise außerhalb und/oder in Lücken (L₁, ..., Lₚ) vom Spektrum des WDM-Signals (S) liegen.

2. Pumpquelle nach Anspruch 1,
**dadurch gekennzeichnet,**
**daß** ein oder mehrere Mischprodukte (MPₖ) (1 ≤ k ≤ n) zwischen Übertragungsbändern (UB₁, UB₂, ...) des Spektrums des Signals (S) liegen.
